Europäisches Patentamt

European Patent Office

Office européen des brevets

(11) Publication number: **0 090 559**
A2

# (12) EUROPEAN PATENT APPLICATION

(21) Application number: **83301526.6**

(22) Date of filing: **18.03.83**

(51) Int. Cl.³: **A 21 D 13/00**, A 23 B 7/16

(30) Priority: **26.03.82 US 362180**

(43) Date of publication of application: **05.10.83**
**Bulletin 83/40**

(84) Designated Contracting States: **AT BE CH DE FR GB IT
LI LU NL SE**

(71) Applicant: **GENERAL FOODS CORPORATION, 250 North
Street, White Plains, N.Y. 10625 (US)**

(72) Inventor: **Glasser, George Marvin, Spencer Place,
Ossining New York 10562 (US)**

(74) Representative: **Baillie, Iain Cameron et al, c/o Ladas &
Parry Isartorplatz 5, D-8000 München 2 (DE)**

(54) **Moisture resistant coating for food products.**

(57) A moisture resistant coating composition for food products
comprises 45–85 % edible shellac, 10–45 % edible prolamine,
and 0.3–5 % of a cellulosic plasticizing agent, the amounts being
by weight based on the total amount of the three components.
The composition is applied to food products as a solution in a
suitable solvent such as ethanol. The composition has particular
utility for coating frozen bread dough.

ACTORUM AG

-1-

DESCRIPTION
MOISTURE RESISTANT COATING
FOR FOOD PRODUCTS

Technical Field

The present invention relates to a moisture resistant coating composition for food products, to a method of coating food products with that composition, and to food products coated therewith. More particularly, the invention relates to such compositions for farinaceous products and has particular application for coating frozen bread dough.

Many moisture resistant coatings for food products are reported in the literature. Silva et al, U.S. Patent No. 4,293,572 has a lengthy discussion of such coatings for various food products including meats, poultry, raisins, baked products, fruits and nuts and eggs. Patentees state that many of the various coatings described in the literature are unsuited to their particular use - yeast raised doughnuts - and the patentees disclose a dextrin-containing emulsion for that particular purpose. In addition to the literature referred to in the Silva et al patent, other moisture resistant coatings for food products are also disclosed in the literature, and the following U.S. patents are exemplary:

Yamamoto, 3,840,676: Coating composition for food products, including baked bread, comprises a prolamine such as zein and an amino acid such as lysine.

Melnick, 3,021,219: Coating to protect against mold spoilage of baked products, comprises an oil or fat containing sorbic acid.

Matz, 3,293,043: A coating comprising an acetylated monoglyceride for coating a baking adjunct, such as icing, packaged with a refrigerated (not frozen) dough product.

Osborsh, 3,852,483: Fat is used to provide a moisture-resistant coating on an intermediate-moisture food product such as a pet food.

Cosler, 2,791,509: Coating for non-cereal confectionery articles comprises zein and edible acetylated glycerides.

Clark, 3,066,033: Strippable coating comprises esterified cellulose derivative dissolved in an adduct obtained by combining long chain fatty acids, an alkali metal, and epichlorohydrin.

Of course a basic distinction should be drawn between food coatings which are not intended to be eaten, such as strippable coatings, and coatings which are intended to be eaten with the coated food product. The present invention relates to the latter type of coating.

A particular need has arisen for a moisture-resistant coating for farinaceous products, and in particular for frozen farinaceous products such as frozen bread dough. Frozen bread dough, on being stored at freezer temperatures, and particularly if subjected to thawing and freezing cycles, ordinarily will not, when baked, produce the same quality bread as when the dough is fresh frozen. For example, the "oven spring" of the bread - i.e., the volume increase as measured by the difference between the volumes of the baked and frozen loaves - will decrease with time during frozen storage of the dough.

It is an object of the present invention to provide a moisture-resistant coating for food products, to provide methods of coating food products therewith, and to provide food products coated therewith. It is a further object to provide such coating which is intended to be eaten with the coated food product. It is a further object to provide such coating which is suitable for farinaceous products, particularly frozen farinaceous products. It is yet a further object to provide such coating for minimizing loss in oven spring of frozen bread dough.

## Disclosure of the Invention

The foregoing and other objects which will be apparent to those of ordinary skill in the art are achieved in accordance with the present invention by providing a composition for providing a moisture resistant coating on a food product comprising: edible shellac; an edible prolamine; an edible cellulosic plasticizing agent for said prolamine; and a solvent; said shellac being present in an amount of from 45 to 85% by weight of the total weight of said shellac, said promaine, and said cellulosic plasticizing agent; said prolamine being present in an amount of from 10 to 85% by weight of the total weight of said shellac, said prolamine and said cellulosic plasticizing agent; said cellulosic plasticizing agent being present in an amount of 0.3 to 5% by weight of the total weight of said shellac, said prolamine and said cellulosic plasticizing agent, said solvent being sufficiently volatile to be removed from said composition by drying at atmospheric pressure at temperatures not in excess of 200°F (approx. 93°C), said solvent being present in an amount sufficient to provide a composition coatable on a food product to provide an edible moisture-resistant coating on said food product, said coating comprising 45 to 85% by weight of said shellac, 10 to 45% by weight of said prolamine, and 0.3 to 5% by weight of said cellulosic plasticizing agent, by providing a method of coating food products with that composition, and by providing food products coated therewith.

The essential ingredients of the coating composition of the invention are edible shellac, an edible prolamine, an edible cellulosic plasticizing agent, and a solvent.

Edible shellac is widely available in food quality and is known to be useful for coating various food products including rice, and is also used as a coating for pharmaceuticals.

Prolamines are alcohol-soluble water-insoluble proteins which are found primarily in plant products. Among the most common are zein from corn, gliaden from wheat, and hordein from barley. Zein is preferred in the present invention but other prolamines or mixtures of prolamines may be used.

An edible cellulose derivative is used to make the prolamine more pliable and flexible, such that upon expansion the prolamine will not crack thereby permitting the food product, particularly frozen bread dough to retain water, steam, carbon dioxide and other evolved gases both during frozen storage and during baking. Suitable cellulose derivatives include methyl cellulose, ethyl cellulose, hydroxypropyl cellulose, carboxymethyl cellulose, or the like.

The solvent is one in which the prolamine and shellac are at least partially dispersible but mainly soluble and is sufficiently volatile to be removed from the composition by drying at atmospheric pressure and low temperature, not in excess of 200°F (approx. 93°C), preferably at temperatures below 32°F (0°C) and more preferably at 0°F (approx. -18°C). Ethanol is preferred because of its ready availability in food grade quality and because it is quickly evaporated at atmospheric pressure at 0°F (approx. -18°C).

The shellac is present in the coating and in the coating composition in an amount of 45 to 85% by weight, preferably 65 to 80% by weight, based on the total weight of the shellac, prolamine and plasticizing agent, and a typical example is about 74% by weight, same basis.

The prolamine is present in the coating and in the coating composition in an amount of 10-45%, preferably 20 to 30%, and a typical example is about 25%, by weight, same basis.

The cellulosic plasticizing agent is present in the coating and in the coating composition in an amount of 0.3 to 5%, preferably 0.5 to 2%, and a typical example is about 1%, by weight, same basis.

The solvent is used in an amount sufficient to provide, on removal of the solvent, a moisture-resistant coating on the food product, the coating comprising shellac, prolamine and cellulosic material in the amounts mentioned above. The amount of solvent can vary widely, but it is preferred to use a minimum amount consistent with the desirability of forming the coating composition quickly and of rapid removal of solvent. Generally, the amount of solvent will be from 25 to 200% by weight based on the weight of the coating composition. In the case of 80% ethanol, about 50 to 150% is preferred, and a typical example is 86%.

A coating is provided on a food product by coating a composition as described above on a food product in any convenient manner such as by spraying, brushing, dipping or the like. When the product is frozen, the coating composition is preferably applied at a temperature below 32°F (0°C), preferably below 25°F (approx. -4°C). Similarly, solvent removal is also effected at a temperature below 32°F (0°C), preferably below 25°F (approx. -4°C). Most preferably, solvent removal is effected in circulating air at atmospheric pressure at freezer temperatures of, for example, 0°F (approx. -18°C). As will be apparent from the examples which follow, excellent results are achieved by providing plural superposed coatings on the food product. However, the second coating should not be applied until after the first coating has nearly dried. If the first coating is not permitted to dry, when the second coating is applied the first coating will redissolve. Preferably when the second coat is applied, the first coating is nearly dry or tacky because the second coat will bind strongly to the first coating thereby forming a cohesive bond between both coatings. The cohesive bond thus formed will minimize loss of water, steam and evolved gases.

The amount of the coating is preferably the minimum amount needed to provide a continuous coating over the coated area which in most instances will be the entire food product. In general, a coating thickness of 5 to 250 microns will be efficacious, and a coating thickness of 10 to 100 microns is preferred. In a typical example in which two coatings are applied to a one pound loaf of frozen bread dough, the net coating weight (after solvent removal) is about 2.3 grams.

When the moisture-resistant coating is applied to loaves of frozen bread dough, the dough when baked will produce a finished bread product more nearly equivalent to a bread produced from freshly frozen dough. The "oven spring" of the bread will not decrease to the extent of an uncoated frozen bread dough because the coating composition of the invention will prevent and/or retard water, steam, carbon dioxide and other evolved gas from exiting both from the frozen product during storage and the product while it is being baked.

Best Mode for Carrying out the Invention

The invention is illustrated in Examples 1 and 2 which follow.

EXAMPLE 1

A first blend of 75 parts by weight of a 15% by weight solution of edible shellac in 100% ethanol and 25 parts by weight of a 15% by weight solution of zein in 80% ethanol was prepared by blending in a magnetic stirrer. (The edible shellac and zein were commercial products and is assumed to be 80% pure in the foregoing figures. The precise content is a bit lower due to the presence of minor amounts of other materials in these commercial products. For example, the zein contained a low level of propylene glycol and stearic acid.) A second blend of 1.0% hydroxypropyl cellulose (Klucel HF) in 80% ethanol was prepared in the same manner and 90 parts by weight of the first blend and 10 parts by weight of the second blend were blended together to form a

-8-

coating composition using a magnetic stirrer. The coating composition had the following composition:

| Ingredient | Parts by Weight | % (Solids Basis) | % (Composition Basis) |
|---|---|---|---|
| Edible Shellac | 10.12 | 74 | -- |
| Zein | 3.38 | 25 | -- |
| Klucel HF | 0.1 | 0.7 | -- |
| Solvent | 86.4 | -- | 86.4 |
| | 100.0 | | |

The coating composition was coated on loaves of frozen bread dough, using a one inch paint brush and coating the entire loaf. The coated frozen bread loaves were transferred to a freezer and placed on racks and the alcohol solvent was permitted to evaporate at 0°F (approx. -18°C). The average amount of net coating material (after evaporation of the ethanol solvent) was appropriately 2.3 grams. This amounted to an average coating thickness of approximately 20 microns. After the solvent was completely evaporated, the loaves were packaged in conventional wrappers and stored in the freezer at 0°F (approx. -18°C) until tested. Table 1 gives the results of bread loaves treated as indicated. Controls used in the tests were not coated.

Table 1

| Test | Time | Raw Loaf Volume (cc)[1] | Oven Spring (cc)[1] | Difference Relative to Control |
|---|---|---|---|---|
| Control | Start | 1145 | 307 | -- |
| Example 1 | Start | 1088 | 502 | +62% |
| Control | 5 weeks | 1025 | 263 | -- |
| Example 1 | 5 weeks | 1288 | 413 | +64% |
| Control | 10 weeks | 1125 | 250 | -- |

| Test | Time | Raw Loaf Volume $(cc)^{1.}$ | Oven Spring $(cc)^{1.}$ | Difference Relative to Control |
|------|------|------|------|------|
| Example 1 | 10 weeks | 1100 | 313 | +25% |
| Control | 15 weeks | 1012 | 388 | -- |
| Example 1 | 15 weeks | 980 | 495 | +29% |

(1) Average of two runs.

## EXAMPLE 2

The same procedure of Example 1 was followed except that a second batch of frozen bread loaves was coated twice. The second coating was applied after allowing the first coating to dry. The total coating weight was about twice that of Example 1. Results are given in Table 2.

Table 2

| Test | # of Coats | Time | Raw Loaf Volume $(cc)^{2.}$ | Oven Spring Total $(cc)^{2.}$ | Difference Relative to Control |
|------|------|------|------|------|------|
| Control | 0 | Start | 1175 | 238 | -- |
| Example 2 | 1 | Start | 1212 | 363 | +53% |
| Example 2 | 2 | Start | 1138 | 500 | +110% |
| Control | 0 | 5 weeks | 875 | 275 | -- |
| Example 2 | 1 | 5 weeks | 1012 | 225 | -18% |
| Example 2 | 2 | 5 weeks | 1062 | 275 | 0% |
| Control | 0 | 10 weeks | 1038 | 63 | -- |
| Example 2 | 1 | 10 weeks | 1162 | 13 | -79% |
| Example 2 | 2 | 10 weeks | 925 | 275 | +337% |
| Control | 0 | 15 weeks | 1112 | 63 | -- |
| Example 2 | 1 | 15 weeks | 1025 | 37 | -41% |
| Example 2 | 2 | 15 weeks | 1062 | 400 | +535% |

(2) Average of two runs.

As shown in these results, the oven spring was substantially improved when two coatings were applied.

## Comparison Examples

By way of comparison, coatings similar to those of Examples 1 and 2 were prepared except that a single coating agent was used. In coating A, gliaden was used in an amount of 7% in 80% ethanol. In coatings B and C, edible shellac was used in an amount of 15% by weight in 100% ethanol. In coating C, zein (commercial product with propylene glycol and stearic acid at low level) was used in an amount of 15% by weight in 100% ethanol. Results are given in Table 3.

| | | | Oven Spring | |
| | | | Total | Difference |
| Coating | Material | Time | $(cc)^{(3)}$ | Relative to Control |
| --- | --- | --- | --- | --- |
| Control | -- | Start | 312 | -- |
| A | gliaden | Start | 312 | 0% |
| Control | -- | 6 weeks | 325 | -- |
| A | gliaden | 6 weeks | 412 | +27% |
| Control | -- | Start | 420 | -- |
| B | shellac | Start | 370 | -12% |
| Control | -- | 5 weeks | 340 | -- |
| B | shellac | 5 weeks | 413 | +21% |
| Control | -- | 10 weeks | 355 | -- |
| B | shellac | 10 weeks | 545 | +54% |
| Control | -- | 15 weeks | 400 | -- |
| B | shellac | 15 weeks | 423 | +6% |
| Control | -- | Start | 240 | -- |
| C | shellac | Start | 215 | -10% |

| | Coating | Material | Time | Oven Spring | |
|---|---|---|---|---|---|
| | | | | Total (cc)[3] | Difference Relative to Control |
| | D | zein | Start | 312 | +30% |
| | Control | -- | 2 weeks | 177 | -- |
| | C | shellac | 2 weeks | 215 | +21% |
| | D | zein | 2 weeks | 190 | +7% |
| | Control | -- | 5 weeks | 185 | -- |
| | C | shellac | 5 weeks | 220 | +19% |
| | D | zein | 5 weeks | 125 | -32% |

(3) Average of two runs.

While the present coating composition has particular application to frozen bread dough, it is also applicable to other food products such as baked goods and fruits.

CLAIMS

1.      A composition for providing a moisture resistant coating on a food product comprising:  edible shellac;  edible prolamine;  an edible cellulosic plasticizing agent for said prolamine;  and a solvent;  said shellac being present in an amount of from 45 to 85% by weight of the total weight of said shellac, said prolamine, and said cellulosic plasticizing agent;  said prolamine being present in an amount of from 10 to 45% by weight of the total weight of said shellac, said prolamine and said cellulosic plasticizing agent;  said cellulosic plasticizing agent being present in an amount of 0.3 to 5% by weight of the total weight of said shellac, said prolamine and said cellulosic plasticizing agent;  and said solvent being sufficiently volatile to be removed from said composition by drying at atmospheric pressure at temperatures not in excess of $200^{\circ}F$ (approx. $93^{\circ}C$), said solvent being present in an amount sufficient to provide a composition coatable on a food product to provide an edible moisture-resistant coating on said food product, said coating comprising 45 to 85% by weight of said shellac, 10 to 45% by weight of said prolamine, and 0.3 to 5% by weight of said cellulosic plasticizing agent.

2.      A composition according to claim 1 wherein said solvent is of such nature and is present in an amount such that said composition does not freeze at $32^{\circ}F$ ($0^{\circ}C$).

3.      A composition according to claim 2 wherein said shellac is present in an amount of from 65 to 80% by weight, said prolamine is present in an amount of from 20 to 30% by weight, and said cellulosic plasticizing agent is present in an amount of from 0.5 to 2% by weight.

4.      A composition according to claim 2 wherein said shellac is present in an amount of about 74% by weight, said prolamine is present in an amount of about 25% by weight, and said cellulosic plasticizing agent is present in an amount of about 1% by weight.

5.     A composition according to claims 1, 2, 3 or 4 wherein said prolamine is selected from the group consisting of zein, gliaden and hordein, wherein said cellulosic plasticizing agent is selected from the group consisting of methyl cellulose, ethyl cellulose, hydroxypropyl cellulose, and carboxymethyl cellulose, and wherein said solvent comprises ethanol.

6.     A composition according to claim 5 wherein said prolamine comprises zein and wherein said cellulosic plasticizing agent comprises hydroxypropyl cellulose.

7.     A method of providing a moisture resistant coating on a food product in which a food product is coated with a coating composition containing solids and a removable solvent, and in which the solvent is thereafter removed to provide a moisture resistant coating comprising said solids on said food product, wherein said coating composition comprises a composition according to any one of claims 1 to 6.

8.     A method according to claim 6 wherein said food product is farinaceous.

9.     A method according to claim 7 wherein said food product comprises frozen bread dough, and wherein said solvent is removable by evaporation at $0^{o}F$ (approx. $-18^{o}C$) and atmospheric pressure.

10.     A method according to any one of claims 1 to 9 wherein after coating and solvent removal, the coated food product is again coated with said coating composition and solvent is thereafter removed to provide a plurality of layers of said coatings on said food product.

11.     In a food product bearing a moisture resistant coating, the improvement wherein said coating comprises edible shellac, a prolamine, and an edible cellulosic plasticizing agent, said shellac being present in an amount from 45 to 85% by weight, said prolamine being present in an amount of 10 to 45% by weight, and said cellulosic plasticizing agent being present in an amount of from 0.3 to 5% by weight, the amounts being based on the total weight of said shellac, said prolamine, and said cellulosic plasticizing agent.

12. An improved food product according to claim 11 coated with a composition having proportions or components as defined in each of claims 3 to 6.

13. A food product according to claim 12 wherein said food product is farinaceous.

14. A food product according to claim 13 wherein said food product comprises frozen bread dough.

15. A food product according to any one of claims 11 to 14 wherein said moisture resistant coating comprises a plurality of layers of said coating.

16. A food product according to any one of claims 11 to 15 wherein said coating has a thickness of from 5 to 250 microns.

17. An improved food product according to claim 16 wherein said coating has a thickness of from 10 to 100 microns.